# EUROPEAN PATENT SPECIFICATION

(11) **EP 2 718 243 B1**
(45) Date of publication and mention of the grant of the patent: **16.09.2015**
(21) Application number: 12727080.9
(22) Date of filing: 07.06.2012
(51) Int. Cl.: C04B 24/38, C04B 28/02

(54) **CELLULOSE ETHER COMPOUNDS FOR IMPROVED HOT TEMPERATURE PERFORMANCE IN EXTERNAL INSULATION FINISHING SYSTEMS (EIFS) MORTARS**
CELLULOSEETHERVERBINDUNGEN ZUR VERBESSERTEN HEISSTEMPERATURLEISTUNG VON MÖRTEL FÜR WÄRMEDÄMMVERBUNDSYSTEME (WDVS)
COMPOSÉS D'ÉTHER DE CELLULOSE POUR PERFORMANCES À HAUTE TEMPÉRATURE AMÉLIORÉES DANS DES MORTIERS DE SYSTÈMES DE FINITION D'ISOLATION EXTERNE (EIFS)

(30) Priority: 09.06.2011 US 201161520383 P
(43) Date of publication of application: 16.04.2014
(73) Proprietor: Hercules Incorporated, Wilmington, DE 19808 (US)
(72) Inventor: HOHN, Wilfried, Adolf, 50374 Erftstadt (DE); RENNERT, Brigitte, 41460 Neuss (DE); WUNDERLICH, Martin, 40764 Langenfeld (DE); DITTEL, Michael, 40215 Dusseldorf (DE); YOUNG, Teng-Shau, Wilmington, DE 19808 (US)
(74) Representative: Bülle, Jan
(86) International application number: PCT/US2012/041308
(87) International publication number: WO 2012/170666

(56) References cited:
- EP-A2- 1 136 458
- WO-A1-2005/090424
- WO-A1-2009/024105
- DE-A1-102006 013 786
- US-A- 5 591 844
- US-A- 5 641 584
- US-A1- 2005 241 540
- DATABASE WPI Week 200866 Thomson Scientific, London, GB; AN 2008-L17584 XP002682539, YIBO, Y.; SONG L.; HAIHONG, M.; YOUWEN, C.: "Masonry cement having higher strength and water retention", & CN 101 182 139 A (UNIV HUANAN SCI & ENG) 21 May 2008 (2008-05-21)

## Description

### Field of the Invention

The present invention relates to cellulose ether compounds which are useful in increasing the pot life, water retention capability, and open time of mortars while providing high tensile strength values used in the fabrication of external insulation finishing systems (EIFS), particularly mortars for use in hot environments.

### Background of the Invention

Hard coat stucco has been in use since ancient time, while synthetic stuccos and exterior insulation and finishing systems ("EIFS") have been used on construction in many countries for more than fifty years. These are also referred to as external thermal insulation composite systems. Among the advantages of EIFS is the improved insulation these systems provide over traditional stuccos. Given rising energy prices, EIFS is increasingly attractive. They reduce the costs of heating and air conditioning and help reduce carbon dioxide emissions. Around 50 percent of the energy used for heating buildings is lost through their walls and insulation can cut these losses by as much as 80 percent.

A typical EIFS includes a number of components, such as mortars, insulating slabs and reinforcing mesh. The most common used insulation boards are based on polystyrene. Other materials, such as glass or mineral fibers, are occasionally used. An adhesives mortar is used to bond the insulation slabs to the building. The slabs are then finished with a base coat mortar with embedded reinforcing mesh to protect the system against mechanical damage and weathering. A "finish coat" is sprayed, troweled, or rolled onto the base coat. The finish coat typically provides the color and texture for the structure.

In many regions of the world and at various times of the year, conditions are such that EIFS are often applied in a hot environment and on hot substrates. The application of the mortars used in the base coat for the EIFS is challenging, especially in summer months under hot weather conditions, because of the rapid evaporation or removal of water from the mortar, which results in inferior or poor workability as well as insufficient hydration of the mortar. The physical characteristics of a hardened traditional mortar are strongly influenced by its hydration process, and thus, by the rate of water removal there from during the setting operation.

US 2005/241540 A1 discloses a mixture composition of a cellulose ether made from raw cotton linters and at least one additive that is used in a dry cement based plaster (or render) composition wherein the amount of the cellulose ether in the render composition is significantly reduced. When this render composition is mixed with water and applied to a substrate, the water retention and thickening and/or sag resistance of the wet plaster are comparable or improved as compared to when using conventional similar cellulose ethers.

Workability, pot life, open time, as well as abrasion and crack resistance are key parameters that suffer under these conditions. Although methylhydroxypropyl cellulose (MHPC) and methylhydroxyethyl cellulose (MHEC) based products are considered as current state of the art technology, the high temperature performance of mortars containing either MHPC or MHEC is lacking. Even at higher dosage workability, crack resistance, pot life, and open time of the EIFS mortars containing either MHPC or MHEC are still not acceptable.

The need exists for an EIFS mortar which has the necessary pot life and open time under hot weather conditions to permit the application of an EIFS mortar in the formation of an EIFS while retaining enough water during mixing and upon application to result in a finished EIFS with the necessary functionality and aesthetics.

### Brief Descrintion of the Invention

The present invention relates to an EIFS mortar having improved pot life and open time under hot weather conditions. The EIFS mortar of the present invention contains cement, filler/aggregate and a blend of methylhydroxyethylcellulose and hydroxyethylcellulose. The EIFS mortar also contains sufficient water to provide appropriate consistency to the mortar. The blend of methylhydroxyethylcellulose and hydroxyethylcellulose in the EIFS mortar is an amount of 0.10 % to 1% by weight, based on the weight of the EIFS mortar on a dry basis and wherein ratio of methylhydroxyethylcellulose to hydroxyethylcellulose in the blend is in the range of 10:90 to 90:10 by weight.

### Brief Description of the Figures.

Further embodiments of the present invention can be understood with the appended drawings.
Figure 1 is a graph of the water retention capability of various EIFS mortar compositions at 70°C.
Figure 2 is a graph of the pot life at 40°C to reach a viscosity of 800 Pas in minutes of various EIFS mortar compositions.
Figure 3 is a cutaway perspective of an EIFS containing the EIFS mortar compositions of the present invention.

### Detailed Description of the Invention

The present invention relates to a cellulose ether product for use in EIFS applications under hot climate conditions. The cellulose ether product of the present invention improves various important application process-related parameters like water retention, pot life, and open time at high temperatures.

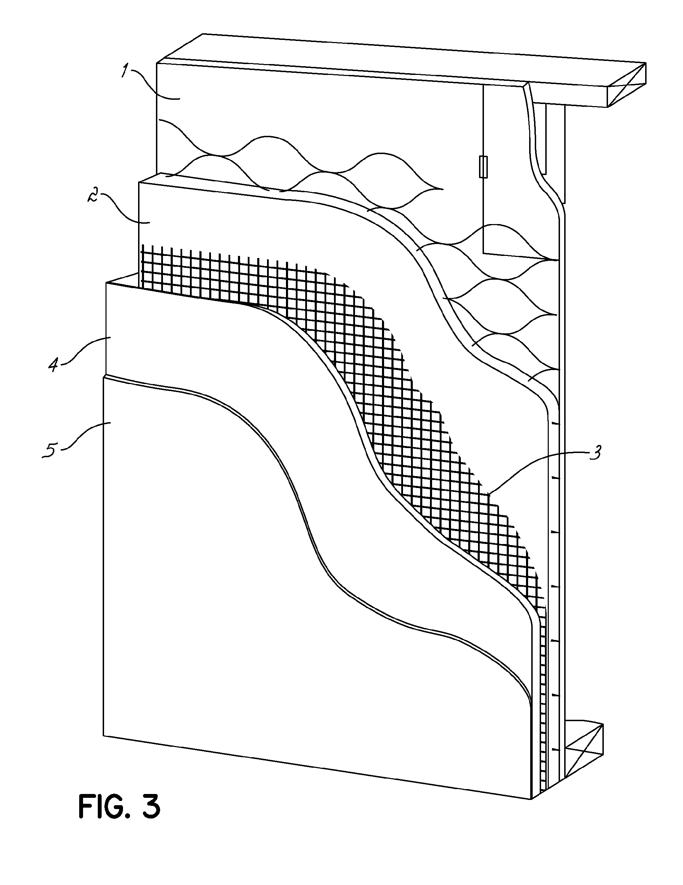

Figure 3 is a graphic depiction of a typical EIFS where the various layers are depicted in a cutaway perspective. The EIFS contains a base substrate 1 which may be composed of wood, concrete or masonry, for example. The next layer 2 is an insulation layer or slab which is fixed to the substrate using an adhesive mortar. The next layer 3 is a reinforcing mesh which can be embedded in 4 the EIFS mortar, i.e. reinforcement mortar layer. Finally, the finish coat 5 is present on the outside/visible surface of the EIFS.

The insulating slab can be polyurethane, expanded polystyrene, extruded polystyrene, extruded polyethylene; polyisocyanurate or mineral wool such as glass, wool, or rock mineral wool.

The EIFS mortar includes various components including a cement, a filler/aggregate, a rheology control agent including a blend of methylhydroxyethylcellulose and hydroxyethylcellulose, and sufficient water to provide appropriate consistency to the EIFS mortar. The rheology control agent may be present in an amount of 0.1 % to 1% by weight, based on the weight of the EIFS mortar on a dry basis. The term "cement" is intended to include, but is not limited to: hydraulic cements, such as Portland Cement, Composite Cements, which are blended cements containing Portland Cement and other components like e.g. fly ash, blast furnace slag, limestone, pozzolans, silica fume, and the like, and mixtures thereof, or alumina cement, and the like, and mixtures thereof.

Any type of filler/aggregate that is commonly used in the building industry may be used effectively in the context of this invention. Examples of suitable filler/aggregates such as silica sands, calcium carbonate, dolomite, as well as lightweight aggregates such as perlites, polystyrene beads, hollow/expanded glass or ceramic spheres cork, rubber, and the like, and mixture thereof. The proportion of filler/aggregate in the mortar is preferably between 50% and 85%, more preferably between 60% and 80%, and most preferably between 65% and 75% by weight, based on the total dry ingredients.

The rheology control agent of use in the EIFS mortar of the present invention is a blend of methylhydroxyethylcellulose (MHEC) and hydroxyethylcellulose (HEC). The blend of MHEC and HEC in rheology control agent present in the EIFS mortar may be in a ratio of MHEC to HEC of 10:90 to 90:10, preferably 30:70 to 70:30 or 50:50.

The water retention of an EIFS mortar is mainly influenced by the cellulose ether. Typical cellulose ethers such as methylhydroxypropylcellulose (MHPC) or MHEC perform well at temperatures up to 40°C, but at higher temperatures, water retention capability of EIFS mortars relying solely on these typical cellulose ethers suffers significantly.

From application tests, it is known that water retention capability of MHPC and MHEC are acceptable and good, respectively, at moderate temperatures (10°C - 40°C). But at elevated temperatures (>40°C), water retention capability of EIFS mortars relying solely on these typical cellulose ethers suffers strongly. Crack formation and powdering effects observed in EIFS mortars are the consequences of insufficient water retention.

It is well known that water retention capability of HEC is very stable at high temperatures. However, HEC shows a lack in paste stability, which results in poor workability and surface appearance. A blend of cellulose ethers, namely HEC and MHEC, exhibits outstanding EIFS performance providing an EIFS with excellent water retention capability at regular and high temperatures in combination with good paste stability.

The EIFS mortar of the present invention also exhibits a prolonged pot life. Pot life of a mortar is an important attribute which permits proper workability of the mortar over a long period of time. EIFS mortars relying solely on either MHPCs or MHECs do not meet user's requirements for pot life, especially at high temperatures. A blend of MHEC and HEC improves pot life of the EIFS mortar significantly. Further optimization of the EIFS mortar pot life can be achieved while combining these blends with additional modification agents.

Open time for EIFS mortar is another desirable attribute of a mortar which permits a long workability and smoothening time of applied mortar. The effect of cellulose ether on open time at high temperatures for EIFS mortar is rather limited. For that reason, an additional modification was made to EIFS mortar containing the cellulose ether blends. In modified cellulose ether/modification blends, an effective amount of a blend of additional agents, typically at an amount less than about 25% by weight of the total rheology control agent added to the EIFS mortar. The additional agent may include a blend or non-ionic and/or anionic polyacrylamide powders and hydroxypropylstarch powder which may be added to the EIFS mortar to further improve its pot life and/or open time performance. These blends prolong open time of the EIFS mortars at high temperatures by about 50% -100 % when compared to blends not containing the additional agents. The additional agents are powders and as such may be added in dry form to the dry mortar.

Furthermore, these specially formulated (modified) cellulose ether/modification blends improve the dry strength values at standard conditions.

The examples are presented to illustrate the invention, parts and percentages being by weight, unless otherwise indicated.

### EXAMPLES

All examples were conducted in an external insulation finishing system (EIFS) mortar of 24.0 wt % Portland Cement CEM I 52.5N, 20.0 wt % fine silica sand 0.5-1mm, 53.0 wt % silica sand, 3.0 wt % redispersible powder, 0.2 wt % zinc stearate as hydrophobic agent, 0.15 wt % cellulose ether.

The cellulose ethers are defined in Table 1.

**Table 1: Analytical data of MHEC and MHPC samples used in Examples**

| | **MHEC 1** | **MHEC** 2 | **MHPC** |
|---|---|---|---|
| % OCH₃ | 23.0-25.0 | 23.0-25.0 | 20.3 |
| CH₃CH₂OOH | 8.0-10.0 | 8.0-10.0 | 0 |
| CH₃[CH₂]₂OOH | 0 | 0 | 9.2 |
| Brookfield viscosity RVT Spindle #6 [mPas], 20 rpm, 2% solution | 55000 | 40000 | 41000 |

A commercial HEC with HE-MS of 2.5 and a Brookfield viscosity (model LVT, Spindle #4 @ 30 rpm) of 2000mPas, produced by a regular HEC-process, was also used in the Examples.

For quality assessment various test methods were applied. Water demand was adjusted to achieve comparable (350,000 to 400,000mPas) Helipath viscosity. The determination of mortar consistency was carried out using a viscometer and spindle system (Helipath device).

### Example 1

### Paste stability improvement in comparison to pure HEC

For paste stability determination, the following described test method was used.

Within 5 seconds, 400g of dry EIFS mortar were added to a corresponding amount of water. After mixing the sample for 45 seconds using a kitchen hand mixer, the resulting EIFS mortar sample was allowed to rest for 5 minutes. After resting for 15 sec, the EIFS mortar sample was remixed with the hand mixer as above. After mixing, the EIFS mortar sample was covered and stored at 20°C. The EIFS mortar sample was not mixed anymore.

The EIFS mortar sample was carefully applied in a frame with height of 8mm on polystyrene board after 90 minutes of storage. The surface of the applied mortar was smoothed one time. Subjective surface appearances, evaluation like e.g. excellent, acceptable, bad, were performed on the applied mortars to estimate the relative performance of the EIFS mortar samples.

### Tests were run using the following EIFS mortar formulation:

24.0% cement 52.5N
53.0% sand F34
20.0% sand 0.5-1mm
3.0% Aquapas™ N2095 redispersible powder (available from Ashland Inc.)
0.2% Zinc stearate

Addition level of cellulose ether (CE) was 0.15%.
The following samples were evaluated:
- References: MHEC2, HEC
- HEC/MHEC2 blends having ratios of 30/70% and 50150%.

Air void stabilization / paste stability are key properties of EIFS mortars. In the EIFS mortar samples which used HEC as the cellulose ether stabilizer, a lack in paste stability, which would manifest in EIFS mortars having poor workability and surface appearance.

As set forth in Table 2, the HEC/MHEC blend examples a various different ratios provide EIFS mortars with excellent water retention capability at high temperatures in combination with good paste stability.

**Table 2: Paste stability for various CEs and CE-blends**

| sample | paste stability |
|---|---|
| 100% MHEC2 | acceptable |
| 100% HEC | bad |
| 70% MHEC2 : 30% HEC | acceptable |
| 50% MHEC2 : 50% HEC | acceptable |

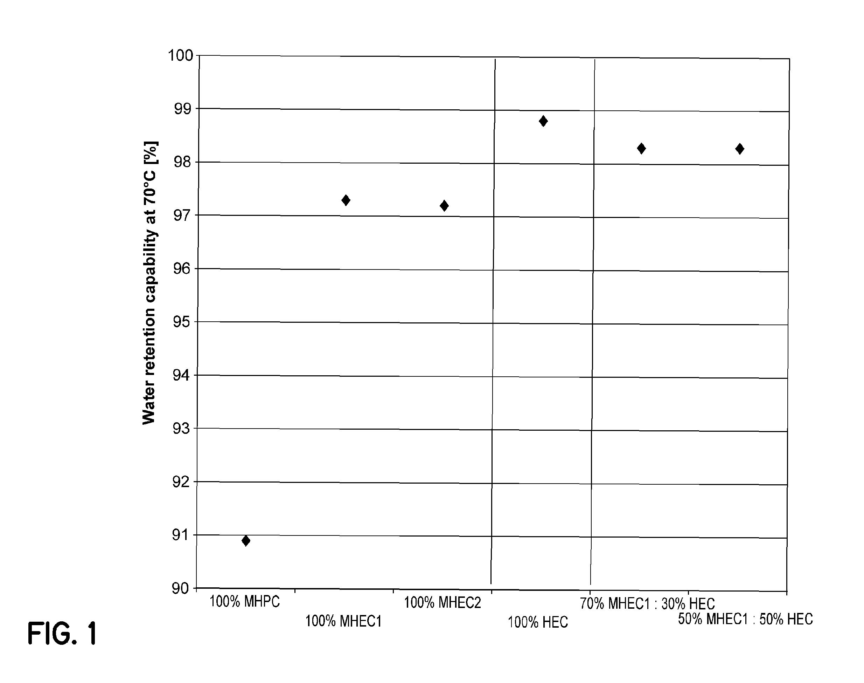

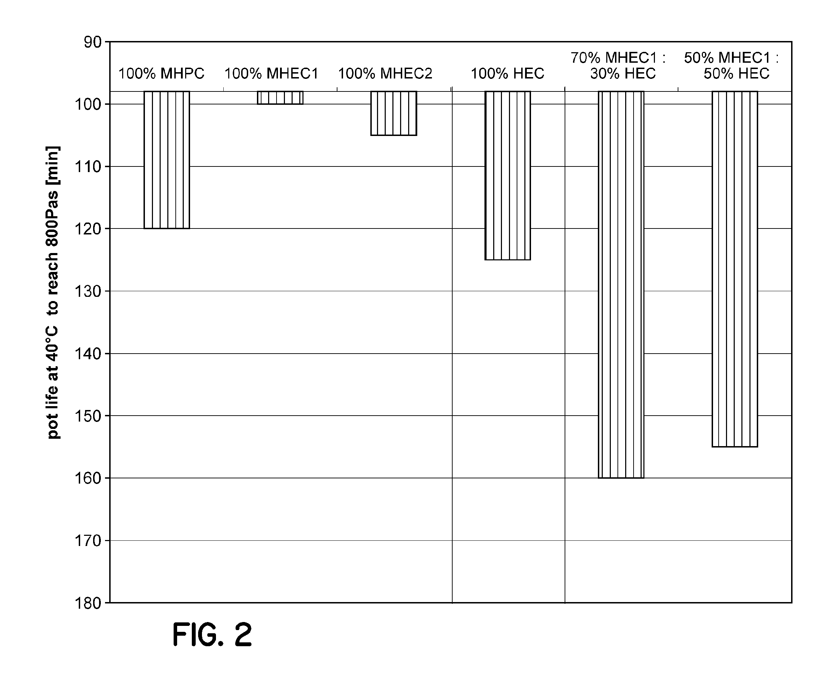

As can be seen in Table 2, as well as in Figures 1 and 2, the performance of EIFS mortars containing only HEC as the cellulose ether is "bad" and the surface of the EIFS mortar is quite rough as compared to the performance of blends of HEC with MHEC which provided EIFS mortars with an "acceptable" rating and a smooth surface.

### Example 2

### Water retention of EIFS mortars at hot temperatures

For water retention determination, the following procedure was used. All material and tools used in applying EIFS mortars were stored in a heater at 70°C. Within 5 seconds, 400g of dry EIFS mortar was added to a corresponding amount of water at 70°C. After mixing the sample for 45 seconds using a kitchen hand mixer, the resulting EIFS mortar sample was allowed to rest for 5 minutes. After resting, the EIFS mortar sample was remixed for 15 seconds with the hand mixer as above. Then, the EIFS mortar was filled into a metal ring, which was positioned on a piece of filter paper. Between the filter paper and the metal ring, a thin fiber fleece was placed while the filter paper was lying on a plastic plate. The weight of the assembly was measured before and after the mortar was filled in. Thus, the weight of the wet mortar was determined. Moreover, the weight of the filter paper was noted. The complete filled assembly was placed in the heater at 70°C for a soaking time of 5 min. After soaking, the weight of the filter paper was measured again and the water retention [%] was calculated.

### Tests were run using the following EIFS mortar formulation:

24.0% cement 52.5N
53.0% sand F34
20.0% sand 0.5-1mm
3.0% Aquapas™ N2095 redispersible powder (available from Ashland Inc.)
0.2% Zinc stearate
Addition level of cellulose ether (CE) was 0.15%.

The following samples were investigated:
- Reference: MHPC, HEC, MHEC1, MHEC2
- HEC / MHEC1 blends having ratios of 30/70% and 50150%.

As illustrated in Figure 1, the EIFS mortars containing HEC/MHEC1-blends exhibit improved water retention at hot temperatures when compared to EIFS mortars containing pure MHEC1, MHEC2 or MHPC-grades.

### Example 3

### Extension of Pot Life

For pot life determination, all materials and tools used in producing and applying EIFS mortars were stored before testing for minimum 2 hour in the heater at 40°C. Mixing of EIFS basic mortar formulation was done as described in Example 1. After mixing, the EIFS mortar sample was covered and stored in the heater at 40°C. Before measuring its Helipath viscosity, the sample was remixed for 5 sec with hand mixer as in Example 1. For each sample, its Helipath viscosity was determined after 0 minutes, 30 minutes and every 30 minutes thereafter up to 4 hours. The time for a sample of EIFS mortar to reach a Helipath viscosity of greater than 800,000 mPas defines that sample's pot life.

### Tests were run using the following EIFS mortar formulation:

24.0% cement 52.5R
53.0% sand F34
20.0% sand 0.5-1mm
3.0% Aquapas™ N2095 redispersible powder
0.2% Zinc stearate

Addition level of cellulose ether (CE) was 0.15%.

The following samples were investigated:
- References: MHPC, HEC, MHEC1, MHEC2
- HEC / MHEC1 blends having ratios of 30/70% and 50/50%.

Pot life required to ensure proper workability of an EIFS mortar over a long period of time (1-4 hours). Compared to pure MHEC, MHPC as well as HEC, a blend of MHEC1 and HEC improves the pot life of EIFS mortars significantly as illustrated in Figure 2. Mortar consistency was maintained for a longer time period. While having temperature stability, EIFS mortars can avoid premature hardening and as a consequence such EIFS mortars exhibit longer workability and higher efficiency during application when compared to pure MHEC, MHPC and HEC.

### Example 4

### Extension of Open Time

The open time determination was done in a climate room at 40°C with 30% relative humidity. All materials and tools used in producing and applying EIFS mortars were stored in the climate room for minimum 1 hour before mixing the EIFS mortars. Mixing of EIFS basic mortar formulation was done as described in Example 1. The fresh EIFS mortar was applied with notched spreader (10x10 mm) on polystyrene board. After the first 5 minutes and then for every 2 minutes thereafter during the duration of the test, an earthenware tile (5x5 cm) was embedded by loading with a 2 kg weight for 30 seconds. After that, the backside of tile was examined to determine the extent of coverage of the tile by mortar. Open time for an EIFS mortar sample was complete when less then 50% of the backside of the tile, after being embedded, was covered with mortar.

### Tests were run using the following EIFS mortar formulation:

| | |
|---|---|
| 24.0% | CEM 152.5N |
| 53.0% | Sand F34 |
| 20.0% | Sand 0.5-1mm |
| 3.0% | Aquapas™ N2095 redispersible powder (available from Ashland Inc.) |
| | |
| 0.2% | Zinc stearate |

Addition level of cellulose ether (CE) was 0.15%.

The following samples were investigated:

| | |
|---|---|
| CE: | MHEC2 |
| HEC / CE blend: | HEC / MHEC2 (50% / 50%) |

Open time of EIFS is essential to have long workability and smoothening time of applied mortar. Impact of cellulose ether on open time at high temperatures is very limited. Only slight improvement in open time while changing from MHPC to an HEC/MHEC-blend could be found (see table 3).

**Table 3: Open time of MHPC and an HEC/MHEC-blend**

| | | Open time@40°C |
|---|---|---|
| MHPC | 100 % | 7 min |
| HEC/MHEC2 | 50% / 50% | 9 min |

### Example 5

### Extension of Open Time

### Tests were run using the following EIFS mortar formulation:

| | |
|---|---|
| 24.0% | cement 52.5N |
| 53.0% | sand F34 |
| 20.0% | sand 0.5-1mm |
| 3.0% | Aquapas™ N2095 redispersible powder (available from Ashland Inc.) |
| 0.2% | Zinc stearate |

Addition level of cellulose ether (CE) was 0.15%.

The following samples were investigated:
Comparative examples: MHPC, MHEC2
Examples: modified HEC/MHEC1 blend having a ratio of 30/70% are found in Table 4. The MHEC and HEC make up approximately 81% by weight of the rheology control agent with the balance of the modified HEC/MHEC1 blend being the additional agents listed in Table 4.

**Table 4**

| **COMPONENTS** | **CONCENTRATION [%]** | **DESCRIPTION** |
|---|---|---|
| MHEC 1 | 56.6 | 23.0- 25.0% OCH3; 8.0-10.0% EOOH; 55000mPas Brookfield viscosity RVT Spindle 7 (20rpm, 2% solution) |
| HEC | 24.4 | HE-MS of 2.5; 2000mPas Brookfield viscosity, LVT spindle 4 (30rpm, 2% solution) |
| polyacrylamide A | 1 | anionic charge: degree of charge of 0-20 wt%; 1 wt-% aqueous viscosity of 500 mPas |
| polyacrylamide B | 1.5 | anionic charge: degree of charge of 20-40 mol-%; 0.5% aqueous solution viscosity of 700-900 mPas |
| polyacrylamide C | 1.5 | anionic charge: degree of charge of 25-40 wt-%; 0.5% aqueous solution viscosity of 2500-5000 mPas |
| hydroxypropyl starch | 15 | with CH₃[CH₂]₂OOH-content >25%; 5% solution viscosity of 1000-1800 mPas measured with Brookfield at 50 rpm |

Open time for EIFS mortars are needed to have sufficiently long workability and smoothening time to permit the application of mortar. In the comparative examples, the effect of the cellulose ether contained in the EIFS mortar on open time at high temperatures was limited. Only a slight improvement while changing the cellulose ether in the comparative examples could be found.

Compared to non-modified MHEC or MHPC comparative examples, this example of the modified cellulose ether blend prolongs open time of the EIFS mortar at high temperatures (40°C) by 50% -100 % while increasing of water factor. In Table 5, the extension of open time of the modified HEC/MHEC 1-blend of the present invention, designated as Sample 11, was determined.

**Table 5**

| Open time of reference samples and modified MHEC/HEC-blend | | | | |
|---|---|---|---|---|
| Sample | Modification* | (HEC:CE) | WF | Open Time (40°C/30%RH) [min] |
| Sample 11 | 19%* | 81% (30% HEC+70% MHEC1) | 0.215 | 33 |
| Reference A | | 100% MHEC2 | 0.17 | 20 |
| Reference B | | 100% MHPC | 0.17 | 15 |

| | | | | |
|---|---|---|---|---|
| *composition of modifications. Table 4 | | | | |

The thickeners of sample 11 were modified with 19% by weight of a blend of additional agents contained of the total thickeners with 1% of the thickeners being an anionic polyacrylamide (anionic charge: 0-20 wt%) having a 1 wt-% aqueous viscosity of 500 mPas; 1.5% of the thickeners being an anionic polyacrylamide (anionic charge: 20-40 mol-%) having a 0.5% aqueous solution viscosity of 700-900 mPas; 1.5% of the thickeners being an anionic polyacrylamide (anionic charge: 20-40 wt-%) having a 0.5% aqueous solution viscosity of 2500-5000 mPas; and 15% of the thickeners being a hydroxypropyl starch having a CH₃[CH₂]₂OOH-content >20% having a 5% solution viscosity of 1000-1800 mPas measured with Brookfield at 50 rpm.

### Example 6

### Improvement of dry Strength

In order to determine the tensile strength of EIFS mortars after dry storage, the following procedure was used.

After mixing according to the procedure of Example 1, the EIFS mortar was applied in a frame (440mm x 67mm x 6mm) which was positioned on a polystyrene board. The surface of the applied EIFS mortar was smoothed several times to produce a completely smoothed surface. The sample was stored for 28 days in a climate room and tested in according to the standard ETAG4.

### Tests were run using the following EIFS mortar formulation:

| | |
|---|---|
| 24.0% | cement 52.5N |
| 54.0% | sand F34 |
| 20.0% | sand 0.5-1mm |
| 2.0% | Aquapas™ N2095 redispersible powder (available from Ashland Inc.) |
| 0.2% | Zinc stearate |

Addition level of cellulose ether (CE) was 0.15%.

The following samples were investigated:
MHPC as reference, MHEC2, sample 11 (see example 4) which is HEC / MHEC1 blends in ratios of 30 / 70% with modification.

In Table 6, the improvement of dry strength values of the new developed modified HEC/MHEC1-blend are illustrated (sample 11). Compared to non-modified MHEC or MHPC samples, the EIFS mortar (sample 11) containing the modified cellulose ether blend increased its dry strength values after 28 days.

**Table 6**

| Strength values of reference samples and modified MHEC/HEC-blend | | | | |
|---|---|---|---|---|
| Sample | Modification* | (HEC:CE) | WF | strength dry 28 day [N/mm²] |
| Sample 11 | 19%* | 81% (30% HEC+70% MHEC1) | 0.215 | 0.14 |
| Reference A | | 100% MHEC2 | 0.17 | 0.09 |
| Reference B | | 100% MHPC | 0.17 | 0.08 |

## Claims

1. An exterior insulation and finishing system (EIFS) mortar for hot temperature application and improved pot life and water retention capability comprising; cement, filler/aggregate, a blend of methylhydroxyethylcellulose and hydroxyethylcellulose, sufficient water to provide appropriate consistency to the mortar, wherein the blend of methylhydroxyethylcellulose and hydroxyethylcellulose is an amount of 0.1 % to 1% by weight, based on the weight of the EIFS mortar on a dry basis and wherein ratio of methylhydroxyethylcellulose to hydroxyethylcellulose in the blend is in the range of 10:90 to 90: 10 by weight.

2. The EIFS mortar of claim 1, wherein the blend of methylhydroxyethylcellulose and hydroxyethylcellulose further comprises anionic polyacrylamide and a hydroxypropyl starch.

3. The EIFS mortar of claim 1, wherein the cement is a hydraulic cement.

4. The EIFS mortar of claim 1, wherein the cement is a Composite Cement and further comprises at least one of fly ash, blast furnace slag, calcium carbonate, pozzolans, and mixtures thereof.

5. The EIFS mortar of claim 1, wherein said cement is an alumina cement.

6. The EIFS mortar of claim 1, wherein the filler/aggregate is selected from the group consisting of silica sands, calcium carbonate and dolomite and combinations thereof.

7. The EIFS mortar of claim 1, wherein the filler/aggregate comprises a lightweight aggregate selected from the group consisting of perlites, polystyrene beads, hollow/expanded glass or ceramic spheres, cork, rubber and mixtures thereof.

8. The EIFS mortar of claim 1, wherein the ratio of methylhydroxyethylcellulose to hydroxyethylcellulose in the blend is in the range of 30:70 to 70:30 by weight.

9. The EIFS mortar of claim 7, wherein the ratio of methylhydroxyethylcellulose to hydroxyethylcellulose in the blend is in the range of 50:50 by weight.

10. A building having a surface finished with an external insulation finishing system including an insulating slab covered with the mortar claimed in claim 1.

11. A building having a surface finished with an external insulation finishing system including an insulating slab covered with the mortar claimed in claim 2.

12. The building claimed in claim 10, wherein said insulating slab is selected from the group consisting of expanded polystyrene, extruded polystyrene, extruded polyethylene, polyurethane, polyisocyanurate, and mineral wool.

13. The building system claimed in claim 11, wherein said insulating slab is selected from the group consisting of expanded polystyrene, extruded polystyrene, extruded polyethylene, polyurethane, polyisocyanurate and mineral wool.

## Patentansprüche

1. Ein Wärmedämmverbundsystem (EIFS)-Mörtel für Hochtemperaturanwendungen mit verbesserter Topfzeit und verbessertem Wasserrückhaltevermögen umfassend; Zement, Füllstoff/Zuschlagstoff, eine Mischung aus Methylhydroxyethylcellulose und Hydroxyethylcellulose, ausreichend Wasser, um dem Mörtel eine angemessene Konsistenz zu verleihen, wobei die Mischung aus Methylhydroxyethylcellulose und Hydroxyethylcellulose in einer Menge von 0,1 Gew.-% bis 1 Gew.-% in Bezug auf das Gewicht des Wärmedämmverbundsystem-Mörtels auf seiner Trockenbasis vorhanden ist, und wobei das Verhältnis von Methylhydroxyethylcellulose zu Hydroxyethylcellulose in der Mischung in einem Bereich von 10:90 bis 90:10 in Bezug auf das Gewicht liegt.

2. Der Wärmedämmverbundsystem-Mörtel gemäß Anspruch 1, wobei die Mischung aus Methylhydroxyethylcellulose und Hydroxyethylcellulose weiterhin anionisches Polyacrylamid und eine Hydroxypropylstärke umfasst.

3. Der Wärmedämmverbundsystem-Mörtel gemäß Anspruch 1, wobei der Zement ein hydraulischer Zement ist.

4. Der Wärmedämmverbundsystem-Mörtel gemäß Anspruch 1, wobei der Zement ein Kompositzement ist und weiterhin wenigstens ein Bestandteil ausgewählt aus Flugasche, Hochofenschlacke, Calciumcarbonat, Puzzolanen und deren Mischungen umfasst.

5. Der Wärmedämmverbundsystem-Mörtel gemäß Anspruch 1, wobei der Zement ein Tonerdeschmelzzement ist.

6. Der Wärmedämmverbundsystem-Mörtel gemäß Anspruch 1, wobei der Füllstoff/Zuschlagstoff ausgewählt wird aus der Gruppe bestehend aus Quarzsanden, Calciumcarbonat und Dolomit und deren Kombinationen.

7. Der Wärmedämmverbundsystem-Mörtel gemäß Anspruch 1, wobei der Füllstoff/Zuschlagstoff einen leichtgewichtigen Zuschlagstoff ausgewählt aus der Gruppe bestehend aus Perliten, Styroporkügelchen, Blähglas-/Hohlglas- oder Keramikkugeln, Kork, Gummi und deren Mischungen umfasst.

8. Der Wärmedämmverbundsystem-Mörtel gemäß Anspruch 1, wobei das Verhältnis von Methylhydroxyethylcellulose zu Hydroxyethylcellulose in der Mischung im Bereich von 30:70 bis 70:30 in Bezug auf das Gewicht liegt.

9. Der Wärmedämmverbundsystem-Mörtel gemäß Anspruch 7, wobei das Verhältnis von Methylhydroxyethylcellulose zu Hydroxyethylcellulose in der Mischung im Bereich von 50:50 in Bezug auf das Gewicht liegt.

10. Ein Gebäude, das eine Oberfläche aufweist, die mit einem Wärmedämmverbundsystem abgeschlossen ist, das eine Isolierplatte umfasst, die mit dem Mörtel, wie in Anspruch 1 beansprucht, bedeckt ist.

11. Ein Gebäude, das eine Oberfläche aufweist, die mit einem Wärmedämmverbundsystem abgeschlossen ist, das eine Isolierplatte umfasst, die mit dem Mörtel, wie in Anspruch 2 beansprucht, bedeckt ist.

12. Das Gebäude, wie in Anspruch 10 beansprucht, wobei die Isolierplatte ausgewählt wird aus der Gruppe bestehend aus expandiertem Polystyrol, extrudiertem Polystyrol, extrudiertem Polyethylen, Polyurethan, Polyisocyanurat und Mineralwolle.

13. Das Gebäudesystem, wie in Anspruch 11 beansprucht, wobei die Isolierplatte ausgewählt wird aus der Gruppe bestehend aus expandiertem Polystyrol, extrudiertem Polystyrol, extrudiertem Polyethylen, Polyurethan, Polyisocyanurat und Mineralwolle.

## Revendications

1. Mortier pour système de finition d'isolation par l'extérieur (EIFS) destiné à une application à haute température avec une durée de vie en pot et une rétention d'eau améliorées, comprenant :
un ciment, une charge/un agrégat, un mélange de méthylhydroxyéthylcellulose et d'hydroxyéthylcellulose, une quantité suffisante d'eau pour donner une consistance appropriée au mortier, le mélange de méthylhydroxyéthylcellulose et d'hydroxyéthylcellulose représentant une quantité de 0,1 % à 1 % en poids, relativement au poids à sec du mortier EIFS et le rapport de la méthylhydroxyéthylcellulose contre l'hydroxyéthylcellulose dans le mélange étant de 10:90 à 90:10 en poids.

2. Mortier EIFS selon la revendication 1, dans lequel le mélange de méthylhydroxyéthylcellulose et d'hydroxyéthylcellulose comprend en outre un polyacrylamide anionique et un amidon hydroxypropylé.

3. Mortier EIFS selon la revendication 1, dans lequel le ciment est un ciment hydraulique.

4. Mortier EIFS selon la revendication 1, dans lequel le ciment est un ciment composite et comprend en outre au moins l'un de la cendre volante, du laitier de haut fourneau, du carbonate de calcium, des pouzzolanes, et de mélanges de ceux-ci.

5. Mortier EIFS selon la revendication 1, dans lequel le ciment est un ciment alumineux.

6. Mortier EIFS selon la revendication 1, dans lequel la charge/l'agrégat est sélectionné(e) dans le groupe constitué des sables siliceux, du carbonate de calcium et de la dolomite et de combinaisons de ceux-ci.

7. Mortier EIFS selon la revendication 1, dans lequel la charge/l'agrégat comprend un agrégat léger sélectionné dans le groupe constitué des perlites, des billes de polystyrène, du verre creux/expansé ou des sphères en céramique, du liège, du caoutchouc et de mélanges de ceux-ci.

8. Mortier EIFS selon la revendication 1, dans lequel le rapport de la méthylhydroxyéthylcellulose contre l'hydroxyéthylcellulose dans le mélange est de 30:70 à 70:30 en poids.

9. Mortier EIFS selon la revendication 7, dans lequel le rapport de la méthylhydroxyéthylcellulose contre l'hydroxyéthylcellulose dans le mélange est de 50:50 en poids.

10. Bâtiment comportant une surface finie avec un système de finition d'isolation par l'extérieur comprenant un panneau isolant recouvert du mortier selon la revendication 1.

11. Bâtiment comportant une surface finie avec un système de finition d'isolation par l'extérieur comprenant un panneau isolant recouvert du mortier selon la revendication 2.

12. Bâtiment selon la revendication 10, ledit panneau isolant étant sélectionné dans le groupe constitué du polystyrène expansé, du polystyrène extrudé, du polyéthylène extrudé, du polyuréthane, du polyisocyanurate, et de la laine minérale.

13. Bâtiment selon la revendication 11, ledit panneau isolant étant sélectionné dans le groupe constitué du polystyrène expansé, du polystyrène extrudé, du polyéthylène extrudé, du polyuréthane, du polyisocyanurate, et de la laine minérale.
